# EUROPÄISCHE PATENTSCHRIFT

(11) **EP 3 057 209 B1**
(45) Veröffentlichungstag und Bekanntmachung des Hinweises auf die Patenterteilung: **17.07.2019**
(21) Anmeldenummer: 15000446.3
(22) Anmeldetag: 14.02.2015
(51) Int. Cl.: H02K 26/00, H02K 7/08

(54) **Antriebssystem in Form eines Torque-Motors**
Drive system in the form of a torque motor
Système d'entraînement sous forme d'un moteur à couple

(43) Veröffentlichungstag der Anmeldung: 17.08.2016
(73) Patentinhaber: Franke & Heydrich KG, 73431 Aalen (DE)
(72) Erfinder: Egelhaaf, Jörg, D 73431 Aalen (DE); Niemeyer, Peter, D 73430 Aalen (DE)
(74) Vertreter: Dziewior, Joachim

(56) Entgegenhaltungen:
- DE-A1-102012 202 842
- JP-A- 2000 262 030
- JP-A- 2001 069 739
- JP-A- 2004 092 689
- JP-A- 2005 020 937
- JP-A- 2005 020 940
- JP-A- 2008 178 165
- US-A- 5 398 571

## Beschreibung

Die Erfindung betrifft ein Antriebssystem in Form eines einen hochpoligen, elektrischen Drehantrieb bildenden Torque-Motors, mit einem Stator und einem Rotor sowie mit am Stator angeordneten Erregerspulen und am Rotor angeordneten Permanentmagneten, die sich über einen Luftspalt radial gegenüberstehen, wobei durch elektrische Ansteuerung der Erregerspulen der Rotor mittels der sich über den Luftspalt erstreckenden Magnetfelder gegenüber dem Stator in Drehung versetzt wird und bei betriebsmäßiger Anordnung/Ausrichtung des Antriebssystems und bei innenliegendem Rotor die bezüglich der Richtung der Gravitationskraft vertikal untere Hälfte des Stators eine geringere Anzahl von Erregerspulen aufweist als die vertikal obere Hälfte bzw. bei innenliegendem Stator die vertikal obere Hälfte des Stators eine geringere Anzahl von Erregerspulen aufweist als die vertikal untere Hälfte.

Derartige Torquemotoren sind aus der Praxis in unterschiedlichen Ausführungsformen bekannt und werden vor allem als Direktantrieb in Rundtischen oder als Schwenkachse von Bearbeitungszentren eingesetzt. Darüber hinaus finden sich Applikationen in Dreh-, Kunststoffspritzgieß- und Holzbearbeitungsmaschinen sowie in der Robotik, aber auch in Sonderanwendungen wie Geräten zur Computer- und Magnetresonanztomographie.

Die JP 2008 178165 A beschreibt einen lagerlosen Motor mit einer verkürzten Spulenendlänge einer Wicklung, der ein Drehmoment und.eine radiale elektromagnetische Kraft durch eine einzige elektromagnetische Maschine erzeugt, die eine hohe Wickelbelegungsrate eines Schlitzes aufweist und eine verbesserte Verteilung und Isolation der magnetomotorischen Kraft zwischen einer Motorwicklung und einer Stützwicklung aufweist. Dazu wird eine konzentrierte Wicklung mit kurzem Abschnitt an einer Motorwicklung an jedem Zahn angelegt. Die Anzahl der Spulen beträgt vier und die Spule enthält mehrere Wicklungen. Weiterhin sind die vier Spulen miteinander verbunden und bilden eine Einphasenwicklung. Da die Stützwicklungen zu torusförmigen Wicklungen ausgebildet sind und die Wicklungsenden der Motorwicklung und die Wicklungsenden der Stützwicklungen einander nicht überlappen, kann die Wicklungsendlänge verkürzt werden. Die Stützwicklungen sind konzentrierte Wicklungen mit fraktioneller Teilung wobei ein Teil der Wicklungen so gemacht ist, dass sie sich um die Außenseite eines Stators winden.

Torquemotoren arbeiten prinzipiell wie normale Synchronmotoren. Üblicherweise sind die Permanentmagnete in den Innendurchmesser einer den Rotor bildenden Trommel eingeklebt, die als Antrieb dient. Der Stator besteht aus einer Vielzahl von Spulen, die in eine Eisenmatrix eingebracht werden. Diese Spulen sind im Stern verschaltet und werden mit 3-phasigem Drehstrom versorgt. Je nach Frequenz ergibt sich die jeweilige Drehzahl.

Auf Grund der relativ hohen Anzahl von Polen kann ein hohes Drehmoment bei niedrigen Drehzahlen erzielt werden. Durch die besondere Anordnung der Permanentmagnete wird das Rastverhalten minimiert. Da die Magnete direkt mit den anzutreibenden Elementen gekuppelt sind, gibt es kein Spiel zwischen sich reibenden Zahnflanken.

Diese Kombination ist - in Verbindung mit vorgespannten Wälzlagern - absolut spielfrei. Je nach verwendetem Meßsystem kann auch die Steifigkeit des Antriebes drastisch erhöht werden, d.h. höhere Leistung und Präzision. Weiter lassen sich die Winkelgeschwindigkeits- und Winkelbeschleunigungswerte erheblich verbessern.

Insbesondere bei Geräten zur Computer- und Magnetresonanztomographie weist der - dann in der Regel als Hohlwelle ausgebildete - Rotor großen Durchmesser und damit entsprechendes Gewicht auf, was besondere Anforderungen an die Lagerung stellt.

Der Erfindung liegt die Aufgabe zugrunde, ein Antriebssystem der eingangs genannten Art so zu verbessern, dass eineitige Lagerbelastungen ganz oder weitgehend ausgeschlossen werden können.

Diese Aufgabe wird nach der Erfindung dadurch gelöst, daß die Ausbildung der Erregerspulen, des Luftspaltes, die Größe der magnetischen Feldstärke sowie weitere, die auf den Rotor linear wirkende Magnetkraft beeinflussende Merkmale derart abgestimmt sind, dass die auf den Rotor wirkende Gravitationskraft hierdurch vollständig oder zumindest weitgehend kompensiert wird, daß bei innenliegendem Rotor die vertikal obere Hälfte des Stators vollständig mit Erregerspulen bestückt ist und die vertikal untere Hälfte des Stators keine Erregerspulen aufweist, bzw. daß bei innenliegendem Stator die vertikal untere Hälfte des Stators vollständig mit Erregerspulen bestückt ist und die vertikal obere Hälfte des Stators keine Erregerspulen aufweist.

Der durch die Erfindung erreichte Vorteil besteht im wesentlichen darin, dass auf Grund der ungleichen Verteilung der Erregerspulen über den Umfang des Stators eine resultierende Kraftkomponente der Magnetfelder verbleibt, wobei die Anordnung der einzelnen Erregerspulen vorteilhafterweise symmetrisch zur auf den Rotor wirkenden Gravitationskraft ausgerichtet sein sollte.

Da bei innenliegendem Rotor die vertikal obere Hälfte des Stators vollständig mit Erregerspulen bestückt ist und die vertikal untere Hälfte des Stators keine Erregerspulen aufweist bzw. bei innenliegendem Stator die vertikal untere Hälfte des Stators vollständig mit Erregerspulen bestückt ist und die vertikal obere Hälfte des Stators keine Erregerspulen aufweist, wird erreicht, dass die zur Entlastung des Lagers wirksame Kraftkomponente maximale Wirksamkeit entfalten kann.

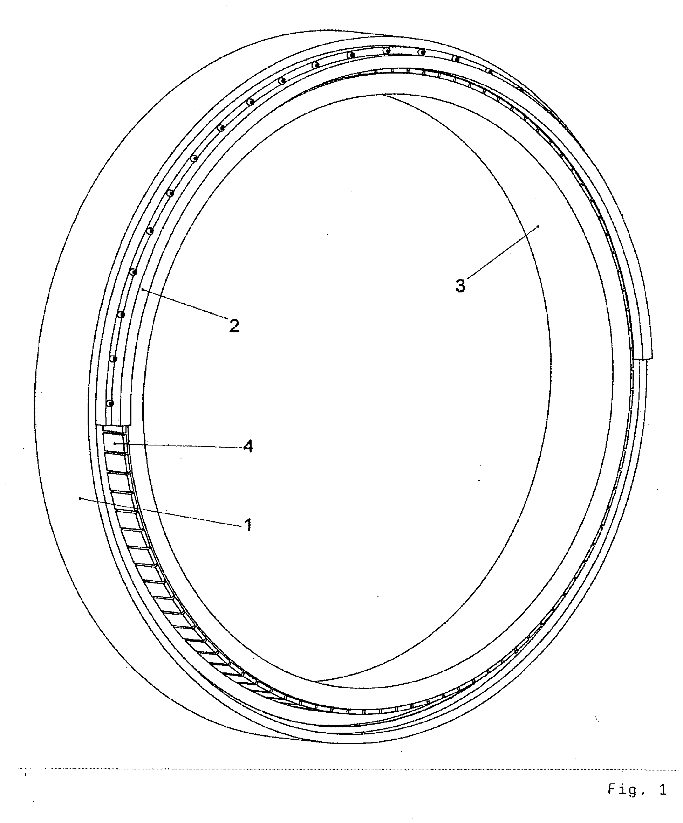

Im folgenden wird die Erfindung an einem in der Zeichnung dargestellten Ausführungsbeispiel näher erläutert; die einzige Figur zeigt das erfindungsgemäße Antriebssystem in einer perspektivischen Anordnung.

Von dem Antriebssystem, das in Form eines Torque-Motors ausgebildet ist, ist in der Zeichnung im wesentlichen nur der Stator 1 sowie der Rotor 3 wiedergegeben. Der Rotor ist in nicht dargestellter Weise gegenüber dem Stator 1 drehbar gelagert, wofür übliche Lager, insbesondere Wälzlager zum Einsatz kommen. Am Stator 1 sind in üblicher Anordnung Erregerspulen 2 und am Rotor 3 Permanentmagnete 4 angeordnet, die sich über einen Luftspalt radial gegenüberstehen. Dadurch kann mittels geeigneter elektrischer Ansteuerung der Erregerspulen 2 der Rotor 3 über die sich über den Luftspalt erstreckenden Magnetfelder gegenüber dem Stator in Drehung versetzt werden.

Bei der in der Zeichnung wiedergegebenen betriebsmäßigen Anordnung bzw. Ausrichtung des Antriebssystems und bei innenliegendem Rotor 3 weist die vertikal untere Hälfte des Stators 1 eine geringere Anzahl von Erregerspulen 2 auf als die vertikal obere Hälfte. Ist das Antriebssystem dagegen mit innenliegendem Stator 1 versehen, so weist die vertikal obere Hälfte des Stators 1 eine geringere Anzahl von Erregerspulen 2 auf als die vertikal untere Hälfte.

Beim dargestellten Ausführungsbeispiel ist die vertikal obere Hälfte des Stators 1 vollständig mit Erregerspulen bestückt, während die vertikal untere Hälfte des Stators keine Erregerspulen 2 aufweist.

Bei der alternativen Möglichkeit, bei der der Stator innenliegt, ist dagegen entsprechend die vertikal untere Hälfte des Stators 1 vollständig mit Erregerspulen bestückt, während die vertikal obere Hälfte des Stators 1 keine Erregerspulen 2 aufweist.

Schließlich sollte die Ausbildung der Erregerspulen, des Luftspaltes, die Größe der magnetischen Feldstärke sowie weitere, die auf den Rotor 3 linear wirkende Magnetkraft beeinflussende Merkmale derart abgestimmt sein, dass die auf den Rotor 3 wirkende Gravitationskraft hierdurch vollständig oder zumindest weitgehend kompensiert wird, da hierdurch eine erhebliche Entlastung des Lagers bezüglich der Gewichtskraft des Rotors 3 erreicht wird.

## Patentansprüche

1. Antriebssystem in Form eines einen hochpoligen, elektrischen Drehantrieb bildenden Torque-Motors, mit einem Stator (1) und einem Rotor (3) sowie mit am Stator angeordneten Erregerspulen (2) und am Rotor (3) angeordneten Permanentmagneten (4), die sich über einen Luftspalt radial gegenüberstehen, wobei durch elektrische Ansteuerung der Erregerspulen (2) der Rotor (3) mittels der sich über den Luftspalt erstreckenden Magnetfelder gegenüber dem Stator (1) in Drehung versetzt wird und bei betriebsmäßiger Anordnung/Ausrichtung des Antriebssystems und bei innenliegendem Rotor (3) die bezüglich der Richtung der Gravitationskraft vertikal untere Hälfte des Stators (1) eine geringere Anzahl von Erregerspulen aufweist als die vertikal obere Hälfte bzw. bei innenliegendem Stator (1) die vertikal obere Hälfte des Stators (1) eine geringere Anzahl von Erregerspulen aufweist als die vertikal untere Hälfte, **dadurch gekennzeichnet, dass** die Ausbildung der Erregerspulen, des Luftspaltes, die Größe der magnetischen Feldstärke sowie weitere, die auf den Rotor (3) linear wirkende Magnetkraft beeinflussende Merkmale derart abgestimmt sind, dass die auf den Rotor (3) wirkende Gravitationskraft hierdurch vollständig oder zumindest weitgehend kompensiert wird, daß bei innenliegendem Rotor (3) die vertikal obere Hälfte des Stators (1) vollständig mit Erregerspulen (2) bestückt ist und die vertikal untere Hälfte des Stators (1) keine Erregerspulen (2) aufweist, bzw. daß bei innenliegendem Stator (1) die vertikal untere Hälfte des Stators (1) vollständig mit Erregerspulen (2) bestückt ist und die vertikal obere Hälfte des Stators (1) keine Erregerspulen (2) aufweist.

## Claims

1. A drive system in the form of a torque motor forming a high-pole electric rotary drive comprising a stator (1) and a rotor (3), and exciter coils (2) arranged on the stator and permanent magnets (4) arranged on the rotor (3), which are radially opposite each other across an air gap, wherein by electrical control of the exciter coils (2) the rotor (3) is caused to rotate relative to the stator (1) by means of magnetic fields extending over the air gap and with proper operational arrangement/orientation of the drive system and with an internal rotor (3) the vertically lower half of the stator (1) with respect to the direction of the force of gravity has a smaller number of exciter coils than the vertically upper half and with an internal stator (1) the vertically upper half of the stator (1) has a smaller number of exciter coils than the vertically lower half, **characterised in that** the configuration of the exciter coils, the air gap, the magnitude of the magnetic field strength and further features which influence the magnetic force acting linearly on the rotor (3) are matched in such a way that the force of gravity applied to the rotor (3) is thereby completely or at least largely compensated, with an internal rotor (3) the vertically upper half of the stator (1) is completely equipped with exciter coils (2) and the vertically lower half of the stator (1) has no exciter coils (2) and with an internal stator (1) the vertically lower half of the stator (1) is completely equipped with exciter coils (2) and the vertically upper half of the stator (1) has no exciter coils (2).

## Revendications

1. Système d'entraînement sous forme d'un moteur couple formant un entraînement rotatif électrique à polarité élevée, avec un stator (1) et un rotor (3) ainsi qu'avec des bobines d'excitation (2) disposées sur le stator et des aimants permanents (4) disposés sur le rotor (3), qui se font face radialement via un entrefer, dans lequel le rotor (3) est mis en rotation par rapport au stator (1) par commande électrique des bobines d'excitation (2) au moyen des champs magnétiques s'étendant dans l'entrefer et, dans une disposition/orientation adaptée au fonctionnement du système d'entraînement, et avec le rotor (3) situé à l'intérieur, la moitié du stator (1) verticalement inférieure par rapport à la direction de la force de gravité présente un plus petit nombre de bobines d'excitation que la moitié verticalement supérieure ou avec le stator (1) situé à l'intérieur, la moitié verticalement supérieure du stator (1) présente un plus petit nombre de bobines d'excitation que la moitié verticalement inférieure, **caractérisé en ce que** la configuration des bobines d'excitation, de l'entrefer, la grandeur de l'intensité des champs magnétiques ainsi que d'autres caractéristiques influençant la force magnétique qui agit linéairement sur le rotor (3) sont accordées de telle manière que la force de gravité agissant sur le rotor (3) soit ainsi entièrement ou au moins largement compensée, **en ce que** lorsque le rotor (3) est situé à l'intérieur, la moitié verticalement supérieure du stator (1) est entièrement garnie de bobines d'excitation (2) et la moitié verticalement inférieure du stator (1) ne présente aucune bobine d'excitation (2), ou **en ce que** lorsque le stator (1) est situé à l'intérieur, la moitié verticalement inférieure du stator (1) est entièrement garnie de bobines d'excitation (2) et la moitié verticalement supérieure du stator (1) ne présente aucune bobine d'excitation (2).
